# FASCICULE DE BREVET EUROPEEN

(11) **EP 1 269 596 B1**
(45) Date de publication et mention de la délivrance du brevet: **29.09.2010**
(21) Numéro de dépôt: 01912078.1
(22) Date de dépôt: 23.03.2001
(51) Int. Cl.: H02H 7/085

(54) **DISPOSITIF D'ARRET D'UN MOTEUR ASYNCHRONE MONOPHASE A CONDENSATEUR DE DEPHASAGE**
HALTEVORRICHTUNG EINER EINPHASIGEN ASYNCHRONMASCHINE MIT PHASENVERSCHIEBUNGSKONDENSATOR
DEVICE FOR STOPPING A SINGLE-PHASE ASYNCHRONOUS MOTOR WITH PHASE-SHIFTING CAPACITOR

(30) Priorité: 27.03.2000 FR 0003853
(43) Date de publication de la demande: 02.01.2003
(73) Titulaire: Somfy SAS, 74300 Cluses (FR)
(72) Inventeur: BRUNO, Serge, F-74460 Marnaz (FR)
(74) Mandataire: Bugnion Genève
(86) Numéro de dépôt international: PCT/IB2001/000494
(87) Numéro de publication internationale: WO 2001/073913

(56) Documents cités:
- EP-A- 0 408 493
- EP-A- 0 551 053
- DE-A- 4 211 495
- US-A- 4 722 019

## Description

L'invention a pour objet un dispositif d'arrêt d'un moteur asynchrone monophasé à condensateur de déphasage utilisant la variation de la tension aux bornes du condensateur de déphasage en fonction de la vitesse du moteur variant elle-même avec la charge, pour arrêter le moteur lorsque la charge sur le moteur atteint une valeur déterminée.

Un tel dispositif est décrit dans le brevet FR 2 649 260. Ce dispositif comprend un circuit délivrant une tension continue homothétique de la tension aux bornes du condensateur de déphasage du moteur, un circuit délivrant au moins une tension constante de référence et un circuit comparateur comparant ces deux tensions et délivrant un signal d'arrêt lorsque la tension continue homothétique devient égale ou inférieure à la tension de référence.

Un tel circuit est particulièrement utile comme dispositif de sécurité pour arrêter le moteur d'une installation dans laquelle la charge entraînée par le moteur risque de rencontrer un obstacle avec les risques d'écrasement ou de détérioration de l'installation que cela comporte. A titre d'exemple on peut citer les portes, volets et stores motorisés.

Un dispositif analogue est décrit dans le brevet EP 0 551 053. Ce dispositif comprend en outre des moyens de compensation pour tenir compte de la fluctuation de la tension aux bornes du condensateur de déphasage avec la température du moteur. Dans le dispositif précédent la tension de référence est de préférence constituée d'une tension asservie à la tension du réseau d'alimentation pour s'affranchir des fluctuations de cette tension.

Dans les deux dispositifs selon l'art antérieur, la tension mesurée est appliquée à un transformateur suivi d'un circuit redresseur avant d'être appliquée à l'une des entrées d'un circuit comparateur, le rapport de transformation étant sensiblement égal à 30.

Or, dans la pratique, de tels dispositifs peuvent s'avérer incapables de détecter une variation de couple avec une sensibilité et une précision satisfaisante. Ceci- découle du fait que dans un moteur asynchrone à condensateur de déphasage, la tension aux bornes du condensateur est sensiblement constante quel que soit la caractéristique du moteur. Cette tension est sensiblement de 560V lorsque le moteur n'est soumis à aucune charge et de 460V lorsque le moteur est bloqué c'est-à-dire chargé à son couple maximum. La variation totale de la tension aux bornes du condensateur est donc de 100V et cette variation est sensiblement linéaire. Ainsi, si on souhaite détecter une variation de couple de 1N, pour un moteur développant un couple maximal de 4N, la variation de tension aux bornes du condensateur sera de 100V/4 c'est-à-dire de 25V, alors que pour un moteur développant un couple maximal de 40N la variation de tension aux bornes du condensateur sera de 100V/40 c'est-à-dire 2,5V.

Si l'on considère que le rapport de transformation du transformateur est de 30, on obtient donc, aux bornes du comparateur, pour une variation de couple de 1 N une variation de tension sensiblement égale à 25V/30 = 0,8V pour un moteur développant un couple de 4N et une variation de tension sensiblement égale à 2,5V/30 = 0,08V pour un moteur développant un couple de 40N. Cette dernière valeur peut se montrer totalement insuffisante pour détecter avec une sensibilité et une précision satisfaisante une élévation de couple devant entraîner impérativement l'arrêt du moteur.

L'invention a pour but de remédier à cet inconvénient.

Le dispositif d'arrêt selon l'invention est **caractérisé en ce qu**'il comprend des moyens de transformation de la variation de la tension aux bornes du condensateur de déphasage correspondant à une variation de couple de 1N en une variation choisie de tension quelle que soit la puissance du moteur, des moyens de comparaison de cette variation choisie avec une tension de référence et des moyens d'arrêt du moteur lorsque la tension transformée est inférieure à la tension de référence.

Selon un mode d'exécution de l'invention, les moyens de transformation de la tension comprennent un redresseur de tension, un abaisseur de tension et un diviseur de tension auquel est appliquée la tension obtenue après l'abaisseur de tension.

L'abaisseur de tension est de préférence constitué d'une diode Zener, qui constitue le moyen idéal pour réaliser une chute de tension. La chute de tension pourrait toutefois être obtenue au moyen d'un circuit ad hoc.

La tension divisée peut être traitée au moyen d'un circuit analogique ou, par échantillonnage, au moyen d'un microprocesseur.

Pour une variation de couple de 1N on choisira une variation de tension adaptée au circuit de traitement utilisé et assurant une bonne sensibilité. Les seuls composants du dispositif qui devront être adaptés au moteur sont la diode Zener et la valeur des résistances du diviseur de tension, voire seulement la valeur de l'une des résistances.

Le dessin annexé représente, à titre d'exemple, deux modes d'exécution de l'invention.
La figure 1 est le schéma électrique d'un mode d'exécution à montage analogique.
La figure 2 représente l'allure des tensions aux points A, B et E du circuit selon figure 1.
La figure 3 représente un mode d'exécution à microprocesseur utilisant donc une conversion analogique/numérique.
La figure 4 illustre le mode de mesure par échantillonnage du mode d'exécution représenté à la figure 3.
La figure 5 représente partiellement une variante des modes d'exécution précédents.

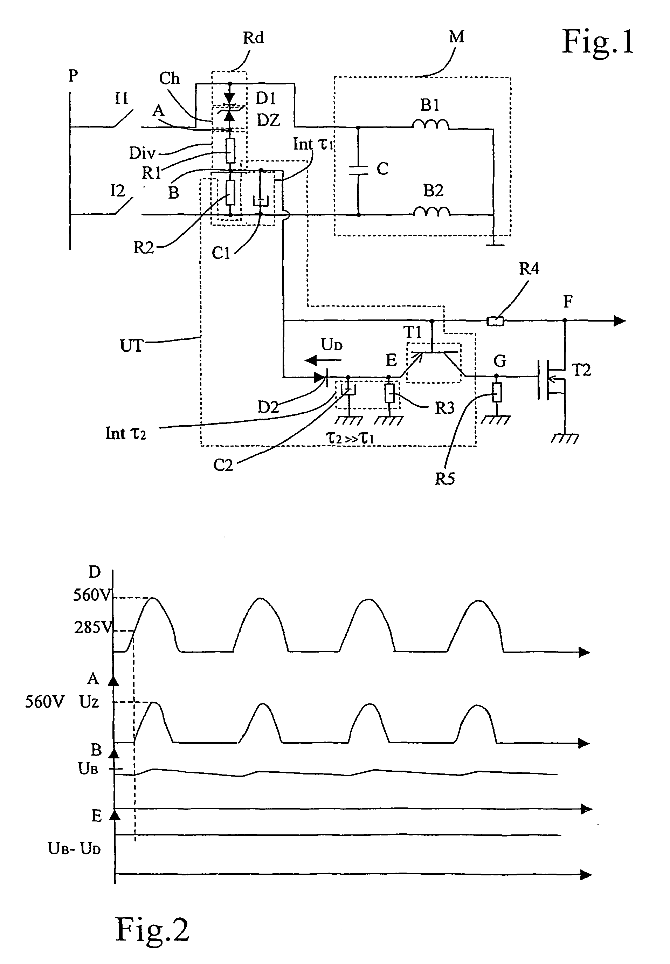

A la figure 1, le moteur monophasé M est représenté comme d'habitude par ses deux enroulements B1 et B2 et par son condensateur de déphasage C. Ce moteur est alimenté par une source de courant monophasé P à travers l'un ou l'autre des interrupteurs I1 ou 12. De manière bien connue, si l'interrupteur I1 est fermé l'enroulement B1 constitue l'enroulement principal et B2 l'enroulement auxiliaire et le moteur tourne dans un sens, alors que si l'interrupteur I2 est fermé c'est l'enroulement B2 qui joue le rôle d'enroulement principal et l'enroulement B1 le rôle d'enroulement auxiliaire et le moteur tourne dans l'autre sens.

Entre les bornes du condensateur de déphasage C sont branchées en série une diode D1, une diode Zener DZ, une résistance R1 et une résistance R2 en parallèle à laquelle est branché un condensateur chimique C1.

La diode D1 constitue un redresseur de tension Rd, la diode Zener un abaisseur de tension Ch et les résistances R1 et R2 un diviseur de tension Div. Quant à R2 et C1, ils constituent ensemble un premier circuit intégrateur Int présentant une constante de temps τ1. Ces composants sont entourés par un trait fin discontinu à la figure 1.

Le point milieu B du diviseur de tension est relié, d'une part, à la base d'un transistor T1 et, d'autre part, à l'anode d'une diode D2 dont la cathode est reliée à l'émetteur de T1, cet émetteur étant en outre relié à la masse par une résistance R3 en parallèle à un condensateur chimique C2 constituant un second circuit intégrateur Int de constante de temps τ2. Ces composants constituent, avec l'intégrateur R2-C1, une unité de traitement UT. Comme on le verra plus loin, le transistor T1 constitue un comparateur flottant. Le collecteur du transistor T1 est relié à la grille d'un transistor MOS T2 polarisé par une résistance R5. La source de T2 est reliée à la masse tandis que son drain est relié à la base de T1 à travers une résistance R4. C'est sur ce drain, en F, que l'on obtient le signal commandant l'arrêt du moteur lorsque le couple résistant détecté dépasse un seuil déterminé.

La diode D1 supprime les alternances négatives de la tension aux bornes de C de manière à pouvoir travailler finalement avec un courant quasi continu au niveau de l'unité de traitement.

Les composants essentiels du circuit sont l'abaisseur de tension et le diviseur. Pour illustrer leur rôle on examinera deux moteurs de puissance sensiblement différente.

Soit un premier moteur développant un couple maximal de 8N. Lorsque son couple résistant varie de 0 à 8N, la tension aux bornes de son condensateur C varie de 560V à 460V. La chute de tension est donc de 100V. Pour une variation de couple de 1N la variation de tension est donc égale à 12V. Or au niveau de l'unité de traitement on désire que la tension maximale en B soit de 25V et que la variation de tension soit de 1V pour 1N. Le rapport du diviseur de tension R1/R2 doit donc être égal à 11. La tension maximale au point A doit donc être égale à 25V x 11 = 275V. Au moyen d'une diode Zener DZ présentant une tension de Zener de 285V, on abaisse par conséquent la tension maximale au point A à 275V.

Dans le second cas, le moteur développe un couple maximum de 50 N. Lorsque le couple varie de 0 à 50 N, la chute de tension aux bornes de C est la même que précédemment. Pour une variation du couple de 1 N on a donc dans ce cas une variation de tension de 2 V aux bornes de C. Le rapport des résistances du diviseur R1/R2 doit donc être égal à 1 et la tension maximale en A doit être égale à 25V x 2 = 50V. La diode DZ doit donc présenter une tension de Zener égale à 510V.

Ainsi, quel que soit le couple maxi développé par le moteur, on pourra obtenir une variation de 1 V pour 1 N au point B en utilisant une diode Zener présentant la tension Zener adéquate et en adaptant le rapport de division du diviseur de tension.

De manière à pouvoir être utilisée par le montage analogique de l'unité de traitement UT, la tension au point milieu du diviseur est intégrée par le premier intégrateur R2-C1. La tension au point B est la tension image du couple. Elle a l'allure représentée en B à la figure 2. Cette tension est, d'une part, appliquée à la base du transistor T1 et, d'autre part, elle est utilisée pour créer une tension de référence au point E, c'est-à-dire sur l'émetteur de T1. A cet effet elle est appliquée à travers la diode D2 à l'intégrateur C2-R3 dont la constante de temps, c'est-à-dire la constante de décharge τ2 est x fois supérieure à τ1, x étant beaucoup plus grand que 1. La diode D2 sépare l'intégrateur C2-R3 de l'intégrateur C1-R2 en empêchant le condensateur C2 de se décharger à travers R2. On a U_{B}=U_{E}+U_{D} où U_{D} est la chute de tension sur la diode D2 bloquée, d'où U_{E}=U_{B}-U_{D}. La tension de référence reste pratiquement constante tant qu'on a une tension en B.

Tant que la tension image du couple appliquée à la base de T1 n'est pas descendue en dessous de la valeur de référence, c'est-à-dire la valeur critique ou de seuil, T1 est bloqué et la tension au point G de son collecteur est égale à 0 V. Si la tension image du couple descend en dessous du seuil critique, T1 conduit et le courant à travers R5 crée une tension en G supérieure à 0 V. T2 conduit et un signal d'arrêt apparaît au point F.

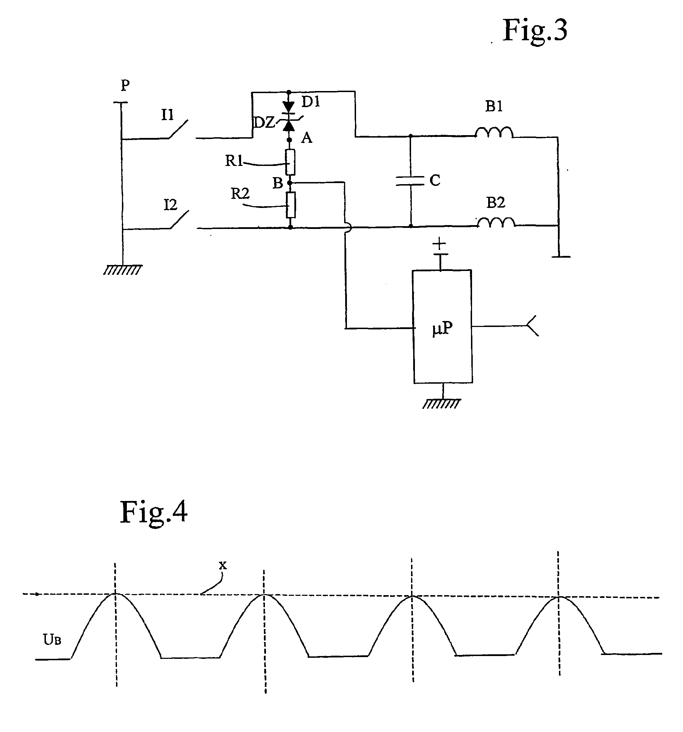

Le signal à la sortie F peut être traité de toutes manières connues. La tension obtenue au point milieu du diviseur R1/R2 peut être traitée de manière numérique au moyen d'un microprocesseur µP, comme représenté schématiquement à la fig. 3. Le microprocesseur doit être équipé d'un convertisseur analogique/numérique. On procède de préférence par échantillonnage, comme illustré par la fig. 4. On détecte par exemple la valeur de crête de la tension U_{B} tous les 20 ms. Tant que les crêtes des alternances diminuent (ce qui signifie que le couple résistant augmente), ou sont égales, on mesure la différence des valeurs crêtes entre les alternances nt4 et n. Si cette valeur, c'est-à-dire la pente de la droite x, dépasse un seuil donné, on arrête le moteur.

Si une valeur crête d'une alternance est plus grande que la précédente, on redémarre le calcul à "zéro", car cela veut dire que le couple résistant diminue. On pourrait, bien entendu, mesurer entre n+3 et n ou n+5 et n, etc.

Il est courant que le tablier d'un volet roulant soit constitué de lames ajourées empilables. Lors d'une manoeuvre de montée d'un tel volet complètement fermé, dans un premier temps la charge opposée au moteur augmente de manière progressive : au fur et à mesure de l'enroulement, il y a dépilement des lames et augmentation simultanée de la charge suspendue et du diamètre d'enroulement. Puis le dépilement atteint la lame basse, dite barre de charge, qui est généralement lestée de manière importante : il y a alors un pic de couple, qui ne doit pas être interprété comme un obstacle ou une butée par le dispositif de détection. Il est possible d'éviter cet inconvénient en ajoutant temporairement un ou plusieurs éléments résistifs en parallèle avec l'une des résistances R1 ou R2 du diviseur de tension, de manière à modifier la sensibilité et la consigne flottante du dispositif pendant la phase critique de démarrage.

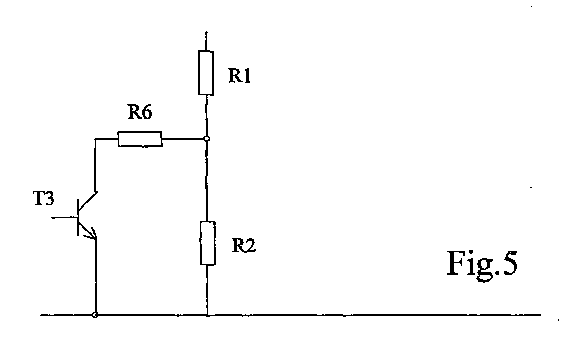

La figure 5 illustre une manière de réaliser cette variante d'exécution. Des circuits représentés aux figures 1 et 3, on a représenté ici seulement les résistances R1 et R2 du diviseur de tension. La modification consiste à ajouter un transistor T3, ici en parallèle à R2, et une résistance R6 branchée entre le collecteur du transistor T3 et le point milieu du diviseur de tension R1/R2. Le transistor T3 fonctionne en interrupteur commandé par une tension appliquée à sa base. T3 est commandé par un temporisateur lors de la mise sous tension du dispositif.

Lors de la mise sous tension, le transistor T3 est conducteur et la résistance R6 est alors en parallèle à R2. Un premier niveau de tension de référence est enregistré par le condensateur C2. Au bout d'une durée fixe, T3 est bloqué par le temporisateur, ce qui a pour effet de déconnecter R6. Il s'ensuit une augmentation simultanée des deux tensions d'entrée et du comparateur flottant et ce dernier ne réagit pas. Par contre, la tension de référence prend une nouvelle valeur qui se rapproche de la tension correspondant au couple normal du moteur en fonctionnement.

Il est possible d'affiner encore cette amélioration en disposant un deuxième transistor et une résistance supplémentaire en parallèle avec les éléments précédents.

Dans le cas du schéma de la figure 3, le transistor T3 pourrait être piloté directement par le microprocesseur.

Cette modification, qui serait totalement inutile si les moteurs démarraient à charge constante, permet d'atteindre en un ou plusieurs paliers successifs la zone de fonctionnement dont la sensibilité est accordée au couple nominal du moteur.

La mise en parallèle d'un ou plusieurs éléments résistifs avec une des résistances R1 ou R2 du diviseur de tension pourrait être exécutée pendant d'autres phases critiques du fonctionnement du moteur.

## Revendications

1. Dispositif d'arrêt d'un moteur asynchrone monophasé à condensateur de déphasage (C) utilisant la variation de la tension aux bornes de ce condensateur en fonction de la vitesse du moteur variant elle-même avec la charge, pour arrêter le moteur lorsque la charge sur le moteur dépasse une valeur déterminée, **caractérisé en ce qu'**il comprend des moyens (D1, DZ, R1, R2) de transformation de la tension aux bornes du condensateur de déphasage en une tension transformée telle que la variation de la tension aux bornes du condensateur de déphasage correspondant à une variation de couple déterminée soit transformée en une variation choisie de la tension quel que soit le couple maximum développé par le moteur, **en ce qu'**il comprend un premier circuit intégrateur de la tension transformée présentant une première constante de temps (τ1) et délivrant une tension image du couple, un second circuit intégrateur, présentant une constante de décharge (τ2) supérieure à la première constante de temps et fournissant une tension de référence à partir de la tension image du couple et des moyens de comparaison de la tension image (UB) avec la tension de référence (UB-UD) et des moyens d'arrêt du moteur lorsque la tension image est inférieure à la tension de référence et **en ce que** les moyens de transformation de la tension comprennent un abaisseur de tension (DZ) et un diviseur de tension (R1, R2).

2. Dispositif d'arrêt selon la revendication 1, **caractérisé en ce que** les moyens de transformation de la tension comprennent un redresseur de tension (D1), l'abaisseur de tension (DZ) et le diviseur de tension (R1, R2) auquel est appliquée la tension obtenue après l'abaisseur de tension.

3. Dispositif d'arrêt selon la revendication 2, **caractérisé en ce que** l'abaisseur de tension est une diode Zener.

4. Dispositif d'arrêt selon la revendication 3, **caractérisé en ce que** le premier circuit intégrateur est un premier intégrateur (R2, C1) auquel est appliquée la tension divisée (UB) par le diviseur de tension, ce premier intégrateur délivrant la tension image du couple, et le second circuit intégrateur est un second intégrateur (R3, C2) fournissant la tension de référence (UB-UD) à partir de la tension image du couple, et **en ce que** le dispositif comprend un comparateur flottant (T1) auxquels sont appliqués la tension image du couple et la tension de référence et un étage de sortie (T2) délivrant un signal d'arrêt lorsque la tension image du couple est inférieure à la tension de référence.

5. Dispositif d'arrêt selon la revendication 4, **caractérisé en ce que** le comparateur flottant est constitué d'un transistor (T1).

6. Dispositif d'arrêt selon l'une des revendications 1 à 3, **caractérisé en ce qu'**il comprend un microprocesseur pour le traitement numérique de la tension transformée.

7. Dispositif d'arrêt selon la revendication 6, **caractérisé en ce que** le microprocesseur mesure la différence entre les valeurs de crête de la tension transformé (UB) entre l'alternance n+m et n, où m est un nombre entier déterminé et invariable, tant que les valeurs de crête diminuent ou sont égales et arrête le moteur lorsque cette différence dépasse un seuil donné, et **en ce que** le microprocesseur redémarre le calcul à zéro lorsqu'une valeur de crête est supérieure à la précédente.

8. Dispositif d'arrêt selon l'une des revendications 1 à 7, **caractérisé en ce qu'**il comprend des moyens de modification de la tension transformée pendant au moins une phase critique de fonctionnement.

9. Dispositif d'arrêt selon la revendication 8, dans lequel les moyens de transformation de la tension comprennent un diviseur de tension (R1, R2), **caractérisé en ce que** les moyens de modification de la tension transformée sont constitués de moyens de mise en parallèle d'au moins une résistance (R6) à l'une des résistances (R1, R2) du diviseur de tension.

10. Dispositif d'arrêt selon la revendication 9, **caractérisé en ce que** les moyens de mise en parallèle sont constitués d'un transistor (T3) commandé par un temporisateur ou par le microprocesseur.

11. Dispositif d'arrêt selon l'une des revendications précédentes, **caractérisé en ce que** le premier circuit intégrateur comprend une résistance (R2) et un condensateur (C1) en parallèle.

12. Dispositif d'arrêt selon l'une des revendications précédentes, **caractérisé en ce que** le second circuit intégrateur comprend une résistance (R3) et un condensateur (C2) en parallèle.

## Claims

1. A stopping device for a single-phase asynchronous motor with phase shifting capacitor (C) using the variation in the voltage across the terminals of this capacitor as a function of the motor speed itself varying with load, so as to stop the motor when the load on the motor exceeds a specified value, **characterized in that** it comprises means (D1, DZ, R1, R2) for transforming the voltage across the terminals of the phase shifting capacitor into a transformed voltage such as the variation in the voltage across the terminals of the phase shifting capacitor corresponding to a specified torque variation is transformed into a chosen variation of the voltage regardless of the maximum torque developed by the motor, **in that** it comprises a first integrator circuit of the transformed voltage a first time constant (τ₁) and delivering a voltage which is the image of the torque, a second integrator circuit exhibiting a discharge constant (τ₂) greater than the first time constant and providing a reference voltage on the basis of the voltage which is the image of the torque and means (T1) for comparing the image voltage (UB) with the reference voltage (UB-UD) and means for stopping the motor when the image voltage is less than the reference voltage and **in that** the means for transforming of the voltage comprising a voltage reducer (DZ) and a voltage divider (R1, R2).

2. The stopping device as claimed in claim 1, **characterized in that** the means for transforming the voltage comprise a voltage rectifier (D1), the voltage reducer (DZ) and the voltage divider (R1, R2) to which is applied the voltage obtained after the voltage reducer.

3. The stopping device as claimed in claim 2, **characterized in that** the voltage reducer is a Zener diode.

4. The stopping device as claimed in claim 3, **characterized in that** the first integrator circuit is a first integrator (R2, C1) to which is applied the voltage divided (UB) by the voltage divider, this first integrator delivering the voltage which is the image of the torque, and the second integrator circuit is the second integrator (R3, C2) providing the reference voltage (UB-UD) on the basis of the voltage which is the image of the torque, and **in that** the device comprises a floating comparator (T1) to which are applied the voltage which is the image of the torque and the reference voltage and an output stage (T2) delivering a stop signal when the voltage which is the image of the torque is less than the reference voltage.

5. The stopping device as claimed in claim 4, **characterized in that** the floating comparator consists of a transistor (T1).

6. The stopping device as claimed in one of claims 1 to 3, **characterized in that** it comprises a microprocessor for the digital processing of the transformed voltage.

7. The stopping device as claimed in claim 6, **characterized in that** the microprocessor measures the difference between the peak values of the transformed voltage (UB) between half-wave n+m and n, where m is a specified and invariable integer number, while the peak values are decreasing or are equal and stops the motor when this difference exceeds a given threshold, and **in that** the microprocessor restarts the calculation at zero when a peak value is greater than the previous one.

8. The stopping device as claimed in one of claims 1 to 7, **characterized in that** it comprises means for modifying the transformed voltage during at least one critical operating phase.

9. The stopping device as claimed in claim 8, in which the means for transforming the voltage comprise a voltage divider (R1, R2), **characterized in that** the means for modifying the transformed voltage consist of means for placing at least one resistor (R6) in parallel with one of the resistors (R1, R2) of the voltage divider.

10. The stopping device as claimed in claim 9, **characterized in that** the means for placing in parallel consist of a transistor (T3) controlled by a timer or by the microprocessor.

11. The stopping device as claimed in one of the preceding claims, **characterized in that** the first integrator circuit comprises a resistor (R2) in parallel with a capacitor (C1).

12. The stopping device as claimed in one of the preceding claims, **characterized in that** the second integrator circuit comprises a resistor (R3) in parallel with a capacitor (C2).

## Patentansprüche

1. Vorrichtung zum Anhalten eines Einphasen-Asynchronmotors mit Phasenschieberkondensator (C), wobei die Änderung der Spannung an den Anschlüssen dieses Kondensators in Abhängigkeit von der Drehzahl des Motors, welche ihrerseits mit der Last veränderlich ist, zum Anhalten des Motors benutzt wird, wenn die am Motor anliegende Last einen vorbestimmten Wert überschreitet, **dadurch gekennzeichnet, dass** die Vorrichtung Mittel (D1, DZ, R1, R2) zum Transformieren der Spannung an den Anschlüssen des Phasenschieberkondensators in eine transformierte Spannung aufweist, derart, dass die Änderung der Spannung an den Anschlüssen des Phasenschieberkondensators, welche einer bestimmten Änderung des Moments entspricht, in eine gewählte Änderung der Spannung umgesetzt wird, unabhängig vom Höchstwert des Moments, welches der Motor entwickelt; dass die Vorrichtung eine erste Schaltung zum Integrieren der transformierten Spannung aufweist, wobei die Schaltung eine erste Zeitkonstante (τ1) besitzt, und eine gespiegelte Spannung des Moments erzeugt, weiterhin eine zweite Integrationsschaltung mit einer Entladungskonstante (τ2), deren Wert grösser ist als die erste Zeitkonstante und welche eine Bezugsspannung ausgehend von der gespiegelten Spannung des Moments erzeugt, sowie Mittel zum Vergleich der gespiegelten Spannung (UB) mit der Bezugsspannung (UB-UD) und noch Mittel zum Anhalten des Motors, wenn die gespiegelte Spannung unter die Bezugsspannung sinkt; und dass die Mittel zum Transformieren der Spannung einen Abwärtstransformator (DZ) und einen Spannungsteiler (R1, R2) aufweisen.

2. Anhaltevorrichtung nach Anspruch 1, **dadurch gekennzeichnet, dass** die Mittel zum Transformieren der Spannung einen Spannungsgleichrichter (D1), den Abwärtstransformator (DZ) und den Spannungsteiler (R1, R2) aufweisen, an welchen die Spannung angelegt ist, die nach dem Herabsetzen der Spannung erhalten wird.

3. Anhaltevorrichtung nach Anspruch 2, **dadurch gekennzeichnet, dass** der Abwärtstransformator eine Zenerdiode ist.

4. Anhaltevorrichtung nach Anspruch 3, **dadurch gekennzeichnet, dass** die erste Integrationsschaltung ein erster Integrator (R2, C1) ist, an den die Teilspannung (UB) angelegt wird, welche vom Spannungsteiler geliefert wird, wobei der erste Integrator die gespiegelte Spannung des Moments abgibt, und wobei die zweite Integrationsschaltung ein zweiter Integrator (R3, C2) ist, welcher die Bezugsspannung (UB-UD) liefert, die von der gespiegelten Spannung des Momentes erhalten wird, und dass die Vorrichtung einen schwebenden Komparator (T1) aufweist, an den die Spiegelspannung des Moments und die Bezugsspannung angelegt werden, und eine Ausgangsstufe (T2), welche ein Stoppsignal abgibt, wenn die Spiegelspannung des Moments unter die Bezugsspannung fällt.

5. Anhaltevorrichtung nach Anspruch 4, **dadurch gekennzeichnet, dass** der schwebende Komparator von einem Transistor (T1) gebildet wird.

6. Anhaltevorrichtung nach einem der Ansprüche 1 bis 3, **dadurch gekennzeichnet, dass** sie einen Mikroprozessor für die digitale Verarbeitung der transformierten Spannung aufweist.

7. Anhaltevorrichtung nach Anspruch 6, **dadurch gekennzeichnet, dass** der Mikroprozessor die Differenz zwischen den Spitzenwerten der transformierten Spannung (UB) zwischen den Halbperioden n+m und n, misst, wobei m eine bestimmte und unveränderliche ganze Zahl ist, soweit die Spitzenwerte abnehmen oder gleich bleiben, und den Motor anhält, wenn diese Differenz einen gegebenen Schwellenwert überschreitet, und dass der Mikroprozessor die Berechnung wieder bei Null beginnt, wenn ein Spitzenwert grösser als der vorhergehende Wert ist.

8. Anhaltevorrichtung nach einem der Ansprüche 1 bis 7, **dadurch gekennzeichnet, dass** sie Mittel zur Veränderung der transformierten Spannung im Verlaufe mindestens einer kritischen Betriebsphase aufweist.

9. Anhaltevorrichtung nach Anspruch 8, bei welcher die Mittel zum Transformieren der Spannung einen Spannungsteiler (R1, R2) aufweisen, **dadurch gekennzeichnet, dass** die Mittel zur Veränderung der transformierten Spannung aus Mitteln zur Parallelschaltung mindestens eines Widerstands (R6) mit einem der Widerstände (R1, R2) des Spannungsteilers bestehen.

10. Anhaltevorrichtung nach Anspruch 9, **dadurch gekennzeichnet, dass** die Mittel zur Parallelschaltung aus einem Transistor (T3) bestehen, welcher von einem Zeitgeber oder vom Mikroprozessor gesteuert wird.

11. Anhaltevorrichtung nach einem der vorstehenden Ansprüche, **dadurch gekennzeichnet, dass** die erste Integrationsschaltung einen Widerstand (R2) und einen Kondensator (C1) aufweist, die parallel geschaltet sind.

12. Anhaltevorrichtung nach einem der vorstehenden Ansprüche, **dadurch gekennzeichnet, dass** die zweite Integrationsschaltung einen Widerstand (R3) und einen Kondensator (C2) aufweist, die parallel geschaltet sind.
